# EUROPEAN PATENT SPECIFICATION

(11) **EP 1 469 667 B1**
(45) Date of publication and mention of the grant of the patent: **30.11.2011**
(21) Application number: 04252244.1
(22) Date of filing: 16.04.2004
(51) Int. Cl.: H04N 1/32, H04N 1/00

(54) **Network terminal apparatus that acquires setting information from another network terminal apparatus**
Netzendgerät welches Einstellungsinformationen eines anderen Netzendgerätes erfasst
Appareil terminal réseau qui acquiert des informations de réglage provenant d'un autre appareil terminal réseau

(30) Priority: 18.04.2003 JP 2003113789
(43) Date of publication of application: 20.10.2004
(73) Proprietor: Ricoh Company, Ltd., Tokyo 143-8555 (JP)
(72) Inventor: Kisono, Masahiro, Ebina-shi, Kanagawa (JP)
(74) Representative: Leeming, John Gerard

(56) References cited:
- EP-A- 1 081 637
- EP-A- 1 191 450
- JP-A- 11 161 441
- JP-A- 2001 142 814
- US-A1- 2002 097 262
- US-B1- 6 313 921

## Description

The present invention generally relates to a network terminal apparatus, and more particularly, to a network terminal apparatus that includes a memory unit for storing setting information of the network terminal apparatus, and communicates via a network.

A network terminal apparatus is such an apparatus that can be connected to the network and communicate with other apparatuses. The network terminal apparatus is different from conventional apparatuses, which do not have network interface, in that the network terminal apparatus can exchange e-mail and browse (or even edit) setting information with Web browser.

Conventionally, when an apparatus is delivered to a user and initially used, the supplier of the apparatus sends a sales person or a customer service engineer, for example, and sets up the apparatus by operating it via an operations panel provided thereon. Otherwise, the customer sets up the apparatus by herself. However, as the apparatus becomes multi-functional, the initial setting of the apparatus becomes complicated. An ordinary user may feel it difficult to set up the apparatus by herself even referring to a user's manual.

When the user starts using another apparatus additionally, the user may want to copy setting information set in currently-used apparatuses. Conventional apparatuses fail to support such a demand of the user.

If many apparatuses are to be delivered to a volume user at a time, the supplier may attach optional peripherals and input initial setting to the apparatuses before delivering the apparatuses to the volume user. However, such a favorable support is limited to volume users. The initial setting is limited to configuration information of optional peripherals, for example.

The setting information of a network terminal apparatus can be browsed through Web browser installed in a personal computer. Additionally, the setting information of the network terminal apparatus can be downloaded into the personal computer for backup. When the network terminal apparatus malfunctions, its setting information is cleared, and then, the backed-up setting information is restored in the network terminal apparatus (see Japanese Patent Publication JP-A-2000-196801, for example).

The problem of the conventional technique described above is that the a personal computer is requisite and the operation may take time.

US 2002/0097262 discloses a system in which a multi functional peripheral device acquires setting information a from a server.

JP-A-11-161441 discloses a printer network in which, when a master device to be the update source of setting information for executing the job of the printer is detected, the setting information is received from the master device and a setting information storage means stores the setting information.

Accordingly, it is a general object of the present invention to provide a novel and useful network terminal apparatus in which at least one of the above problems is eliminated.

Another and more specific object of the present invention is to provide a network terminal apparatus that automatically acquires setting information.

To achieve at least one of the above problems, the present invention provides a network terminal apparatus connected to other network terminal apparatuses via a network, the network terminal apparatus comprising:
a storing unit that stores setting information of the network terminal apparatus;
an acquiring unit that transmits an acquisition request for acquiring setting information to one of the other network terminal apparatuses, receives the setting information from the one of the other network terminal apparatuses; and
a setting unit that sets the received setting information to the network terminal apparatus and stores the received setting information in the storing unit;
a transmitting unit that, in response to receipt of an acquisition request for the setting information stored in the storing unit from another one of the other network terminal apparatuses, retrieves the setting information from the storing unit, and transmits the retrieved setting information to the other one of the other network terminal apparatuses;
characterised in that the network terminal apparatus is configured such that, when it receives the setting information from one of the other network terminal apparatuses, it displays an operational screen and requests the user to select one or more categories of settings that the user desires to set in the network terminal apparatus; and
the setting unit is configured to set the setting information of the selected categories as the setting information.

When the network terminal apparatus requires the setting information stored the one of the other network terminal apparatus, the acquiring unit transmits an acquisition request to the one of the other network terminal apparatus and receives the setting information from the one of the other network terminal apparatus. On the other hand, when the other one of the other network terminal apparatuses requires the setting information of the network terminal apparatus, the transmitting unit can transmit the setting information stored in the storing unit in response to receipt of an acquisition request from the other one of the other network terminal apparatuses.

The invention will now be described by way of non-limiting example with reference to the accompanying Figures, in which:
FIG. 1 is a block diagram showing a network system according to an embodiment;
FIG. 2 is a block diagram showing the configuration of a network facsimile apparatus FX1 and FX2 according to an embodiment;
FIG. 3 is a block diagram showing the . configuration of a network facsimile apparatus FX3 according to an embodiment;
FIG. 4 is a block diagram showing the configuration of a workstation WS (WS1 - WSn) according to an embodiment;
FIG. 5 is a schematic diagram showing setting information according to an embodiment;
FIG. 6 is a sequence diagram for explaining an operation according to an embodiment, in which a network facsimile apparatus FX1 acquires setting information from a network facsimile apparatus FX2;
FIG. 7 is an exemplary a guidance message screen for selecting setting information;
FIG. 8 is a flowchart for explaining an operation according to an embodiment in which a network facsimile apparatus FX acquires setting information;
FIG. 9 is a flowchart for explaining an operation according to an embodiment in which a network facsimile apparatus FX transmits setting information in response to receipt of a request command;
FIG. 10 is an exemplary guidance message screen for selecting setting information according to an embodiment;
FIG. 11 is a sequence diagram for explaining an operation according to another embodiment, in which a network facsimile apparatus FX1 acquires setting information from a network facsimile apparatus FX2;
FIG. 12 is a flowchart for explaining an operation according to another embodiment in which a network facsimile apparatus FX acquires setting information;
FIG. 13 is a flowchart for explaining an operation according to another embodiment in which a network facsimile apparatus FX transmits setting information in response to receipt of a request command;
FIG. 14 is a schematic diagram showing setting information according to another embodiment;
FIG. 15 is a flowchart for explaining an operation according to yet another embodiment in which a network facsimile apparatus FX acquires setting information;
FIG. 16 is a flowchart for explaining an operation according to yet another embodiment in which a network facsimile apparatus FX acquires setting information;
FIG. 17 is a flowchart for explaining an operation according to an embodiment in which a setting information management server SV stores setting information; and
FIG. 18 is a flowchart for explaining an operation according to an embodiment in which a network facsimile apparatus FX acquires setting information from a setting information management server SV.

The preferred embodiments of the present invention are described in detail below.

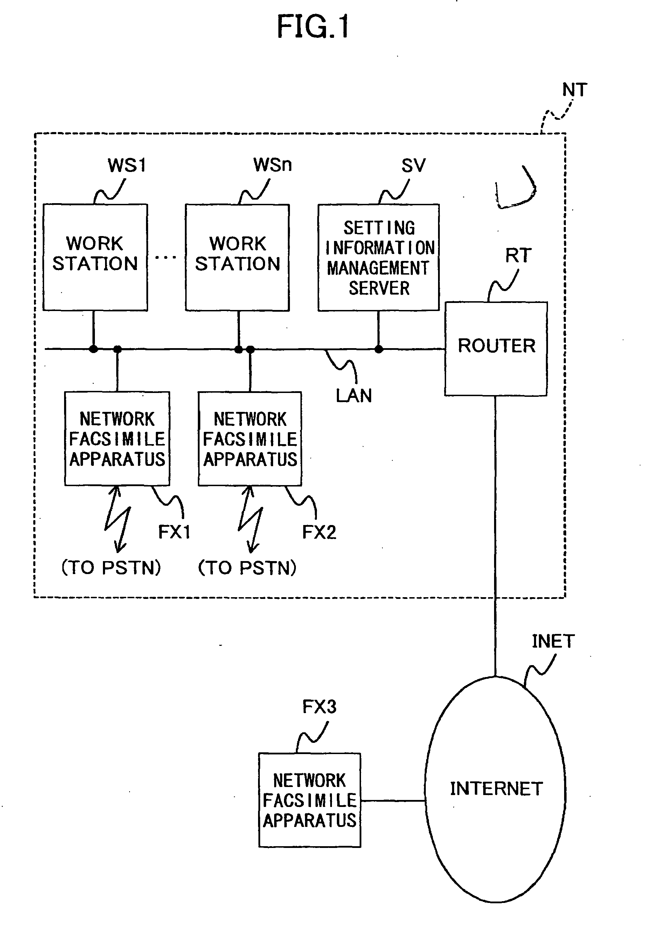

FIG. 1 shows a network system according to an embodiment. Network facsimile apparatuses correspond to network terminal apparatus.

An intranet NT is configured mainly by a local area network LAN. The local area network LAN includes the following: two network facsimile apparatuses FX1 and FX2, multiple workstations WS1 - WSn, and a setting information management server SV. The local area network LAN is connected to the Internet INET via a router RT.

Additionally, a network facsimile apparatus FX3 is connected to the Internet INET.

The network facsimile apparatuses FX1 and FX2 can communicate with the network facsimile apparatus FX3 via the Internet INET.

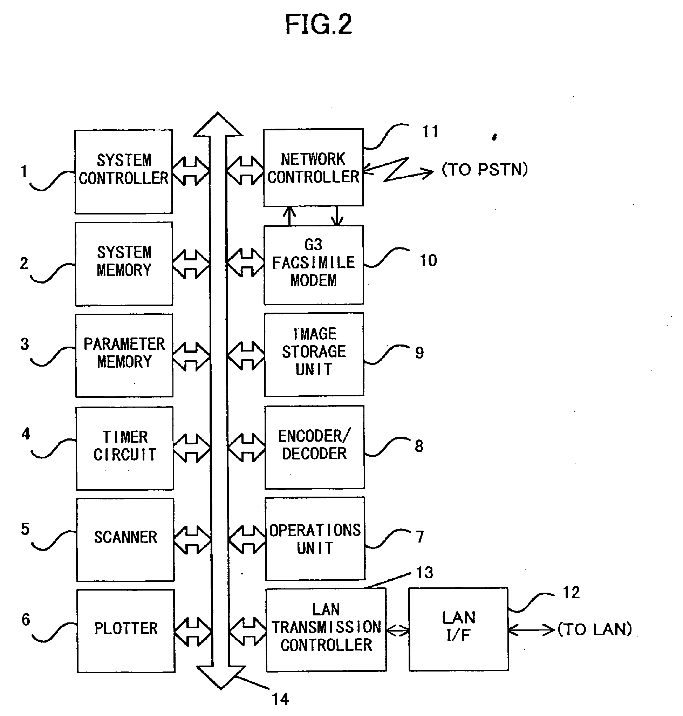

FIG. 2 shows the configuration of the network facsimile FX1. The configuration of the network facsimile FX2 is identical to that of the network facsimile apparatus FX1 shown in FIG. 2.

The network facsimile apparatus FX1 includes the following: a system controller 1, a system memory 2, a parameter memory 3, a timer circuit 4, a scanner 5, a plotter 6, an operations unit 7, an encoder/decoder 8, an image storage unit 9, a G3 facsimile modem 10, a network controller 11, a LAN interface (I/F) 12, and a LAN transmission controller 13.

The system controller 1 controls the operation of other components of the network facsimile apparatus FX1 and the communication in compliance with the facsimile transmission procedure, for example.

The system memory 2 stores computer programs that the system controller 1 executes and various data that the system controller 1 requires for executing the computer programs. Additionally, the system memory 2 provides a working memory region to the system controller 1.

The parameter memory 3 stores various items of information (parameters) required by the network facsimile apparatus FX1.

The timer circuit 4 outputs current time information.

The scanner 5 can read a document thereby to generate image data of a designated resolution. The plotter 6 can print image data of a designated resolution. The operations unit 7 includes operational keys and displays through which a user can operate the network facsimile apparatus FX1.

The encoder/decoder unit 8 encodes and compresses image data into code data, and decodes and decompresses the code data into the original image data. The image storage unit 9 can store the code data.

The Group 3 (G3) facsimile modem 10 is a modem that realizes G3 facsimile communication. The G3 facsimile modem 10 exchanges a transmission procedure signal as a low speed modem (V.21 modem), and exchanges image data as a high speed modem (V.17, V.34, V.29, V.27ter modem for example).

The network controller 11 is an interface unit that connects the network facsimile apparatus FX1 to an analog public switched telephone network PSTN. The network controller 11 is provided with automatic transmission/reception function.

The local area network (LAN) interface (I/F) 12 connects the network facsimile apparatus FX1 to a local area network LAN. The LAN transmission controller 13 controls communications with other data terminals in compliance with various protocol suites via the local area network LAN.

The system controller 1, the system memory 2, the parameter memory 3, the timer circuit 4, the scanner 5, the plotter 6, the operations unit 7, the encoder/decoder unit 8, the image storage unit 9, the G3 facsimile modem 10, the network controller 11, and the LAN transmission controller 13 are connected to each other through an internal bus 14, and exchange data mainly through the internal bus 14 except for the data exchange between the network controller 11 and the G3 facsimile modem 10.

The network controller 11 and the G3 facsimile modem 10 exchange data directly.

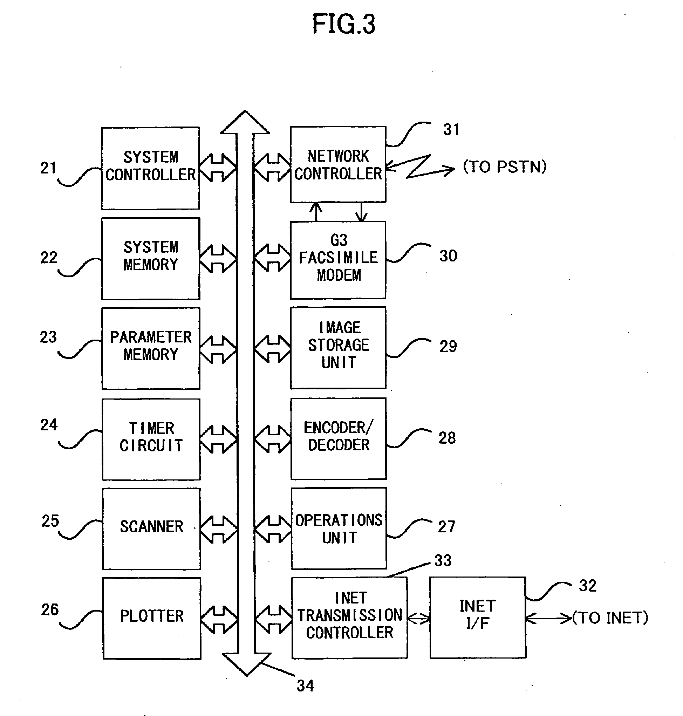

FIG. 3 is a block diagram showing the structure of the network facsimile apparatus FX3 according to an embodiment.

The network facsimile apparatus FX3 includes the following: a system controller 21, a system memory 22, a parameter memory 23, a timer circuit 24, a scanner 25, a plotter 26, an operations unit 27, an encoder/decoder unit 28, an image storage unit 29, a G3 facsimile modem 30, a network controller 31, an internet (INET) interface (I/F) 32, and an INET transmission controller 33.

The system controller 21 controls the operation of other components of the network facsimile apparatus FX3 and the communication in compliance with the facsimile transmission procedure, for example.

The system memory 22 stores computer programs that the system controller 21 executes and various data that the system controller 21 requires for executing the computer programs. Additionally, the system memory 22 provides a working memory region to the system controller 21.

The parameter memory 23 stores various items of information (parameters) required by the network facsimile apparatus FX3.

The timer circuit 24 outputs current time information.

The scanner 25 can read a document thereby to generate image data of a designated resolution. The plotter 26 can print image data of a designated resolution. The operations unit 27 includes operational keys and displays through which a user can operate the network facsimile apparatus FX3.

The encoder/decoder unit 28 encodes and compresses image data into code data, and decodes and decompresses the code data into the original image data. The image storage unit 29 can store the code data.

The Group 3 (G3) facsimile modem 30 is a modem that realizes G3 facsimile communication. The G3 facsimile modem 30 exchanges a transmission procedure signal as a low speed modem (V.21 modem), and exchanges image data as a high speed modem (V.17, V.34, V.29, V.27ter modem for example).

The network controller 31 is an interface unit that connects the network facsimile apparatus FX3 to an analog public switched telephone network PSTN. The network controller 31 is provided with automatic transmission/reception function.

The Internet (INET) interface (I/F) 32 connects the network facsimile apparatus FX3 to the Internet. The INET transmission controller 33 controls communications with other data terminals in compliance with various protocol suites via the Internet INET.

The system controller 21, the system memory 22, the parameter memory 23, the timer circuit 24, the scanner 25, the plotter 26, the operations unit 27, the encoder/decoder unit 28, the image storage unit 29, the G3 facsimile modem 30, the network controller 31, and the INET transmission controller 33 are connected to each other through an internal bus 34, and exchange data mainly through the internal bus 34 except for the data exchange between the network controller 31 and the G3 facsimile modem 30.

The network controller 31 and the G3 facsimile modem 30 exchange data directly.

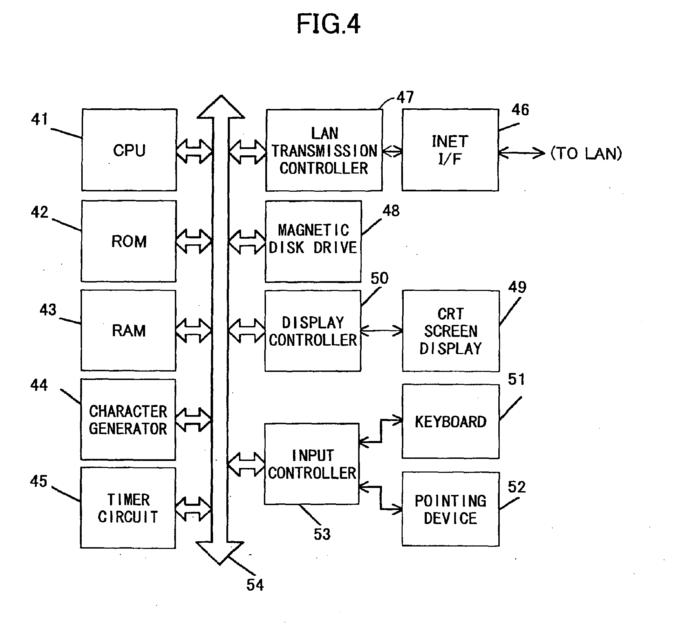

FIG. 4 is a block diagram showing the configuration of the workstation WS (WS1 - WSn) according to an embodiment.

As shown in FIG. 4, the workstation WS includes CPU 41, ROM 42, RAM 43, a character generator 44, a timer circuit 45, a local area network (LAN) interface (I/F) 46, a LAN transmission controller 47, a magnetic disk drive 48, a CRT screen display, a display controller 50, a keyboard 51, a pointing device 52, and an input controller 53.

The CPU (Central Processing Unit) 41 controls the entire system of the workstation WS. The ROM (Read Only Memory) 42 stores computer programs that the CPU 21 executes and data required by the CPU 21. The RAM (Random Access Memory) 43 provides the CPU 41 with a working memory region.

The character generator 44 generates display data of characters. The timer circuit 45 outputs information indicating current time and date. The local area network (LAN) interface 46 is an interface that connects the workstation WS to the local area network (LAN). The LAN transmission controller 47 controls communications in compliance with various protocol suites for exchanging data with other data terminals via the LAN.

The magnetic disk drive 48 stores application programs, work data, file data, and image data. The CRT screen display 49 displays a screen through which a user can operate the workstation WS. The display controller 50 controls the screen displayed on the CRT screen display 49.

The keyboard 51 is an input device through which a user can key in to the workstation WS, and the pointing device 52 is an input device such as a mouse through which the user can designate a point in the screen displayed on the CRT screen display 49. The input controller 53 receives input information from the keyboard 51 and the pointing device 52.

The CPU 41, the ROM 42, the RAM 43, the character generator 44, the timer circuit 45, the LAN transmission controller 47, the magnetic disk drive 48, the display controller 50, and the input controller 53 are connected to each other via a bus 54, and exchange various data mainly through the bus 54.

It is assumed that the terminal apparatuses connected to the local area network LAN exchange data with each other using a combination (so-called protocol suite) of a transmission protocol on or under the transport layer such as TCP/IP and a communication protocol of upper layers over the transport layer.

Communication protocols such as the TCP/IP are defined in "RFC" issued by IETF. For example, TCP is defined in RFC 793, and IP is defined in RFC 793.

The network facsimile apparatuses FX1, FX2, and FX3 have various items of information (setting information) related to their own configuration, state, and parameters, for example.

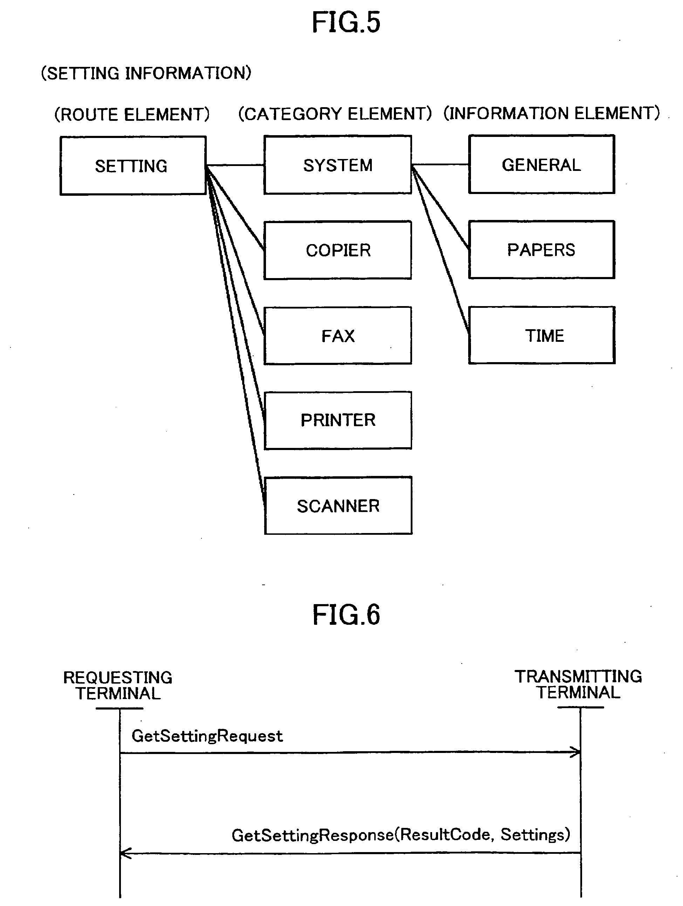

FIG. 5 is a schematic diagram showing the configuration of setting information. As shown in FIG. 5, the setting information includes a root element, multiple category elements, and multiple information elements included in each category element. The setting information is stored in the parameter memory 3.

The setting information is defined using XML (extensible Markup Language). The root element "Setting" is the highest level information element that has multiple category elements. Each category element has one or more information elements.

For example, there are "System" (setting information related to the system), "Copier" (setting information related to copy function), "Facsimile" (setting information related to facsimile function), "Printer" (setting information related to printer function), and "Scanner" (setting information related to scanner function) in the category elements.

There are "General" (information element related to general configuration), "Papers" (information element related to paper), "Time" (information element related to current time and timer) in the category element "System".

The network facsimile apparatus FX1 can acquire the setting information from the network facsimile apparatus FX2. The network facsimile apparatuses FX1 and FX2 use communication protocol such as SOAP (Simple Object Access Protocol), for example, for acquiring the setting information. The XML, the SOAP, and XSLT (described below) are international standards defined under initiative of the W3C (http://www.w3.org/).

FIG. 6 is a sequence diagram for explaining a communication procedure according to an embodiment in which the network facsimile apparatus FX1 (requesting terminal) acquires the setting information from the network facsimile apparatus FX2 (requested terminal). When a user gives an instruction to the network facsimile apparatus FX1 through the operations unit 7, the above communication procedure is activated. The communication procedure complies with the SOAP.

The requesting terminal transmits a command GetSettingRequest to the requested terminal.

In response to receipt of the command GetSettingRequest, the requested terminal retrieves the setting information stored therein, and transmits a response GetSettingResponse to the requesting terminal. The retrieved setting information is arranged in the response GetSettingResponse as parameters.

The response GetSettingResponse includes a parameter "ResultCode" indicating whether the setting information has been successfully acquired, and parameters "Settings" carrying the setting information.

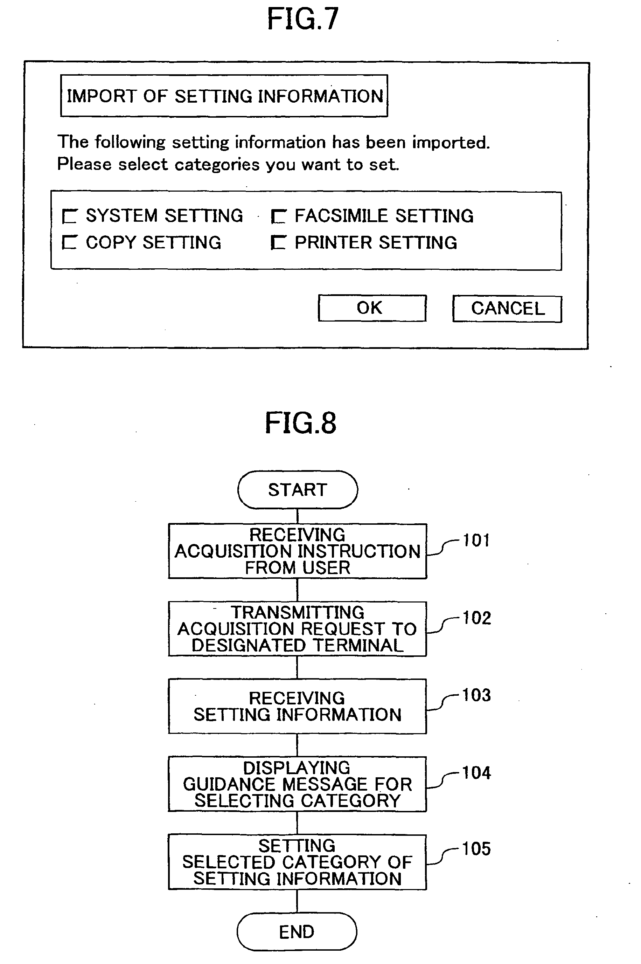

In response to receipt of the response GetSettingResponse, the requesting terminal extracts the parameters "Settings" therefrom. The requesting terminal displays an operational screen as shown in FIG. 7, and requests the user to select one or more categories that the user desires to set in the requesting terminal.

After the user selects the categories and presses the OK button, the requesting terminal sets the information of the selected categories as setting information thereof.

As described above, the user of the network facsimile apparatus FX1 can acquire the setting information from the network facsimile apparatus FX2, and sets the acquired setting information as setting information of the network facsimile apparatus FX1. The user does not need to input the setting information by herself to the network facsimile apparatus FX1. The user can appropriately use the network facsimile apparatus FX1 by importing the setting information from the network facsimile apparatus FX2.

Additionally, the user can select one or more categories of the acquired setting information, and can set only the selected categories to the network facsimile apparatus FX1. Accordingly, the user can prevent irrelevant setting information from being set to the network facsimile apparatus FX1.

FIG. 8 is a flowchart for explaining the operation of the network facsimile apparatus FX1 according to an embodiment.

The network facsimile apparatus FX1 receives an acquisition instruction from the user to acquire setting information (step 101). In response to receipt of the acquisition instruction from the user, the network facsimile apparatus FX1 transmits a command GetSettingRequest to a designated terminal (the requested terminal, or the network facsimile apparatus FX2 in this case) (step 102).

In step 101, the network facsimile apparatus FX1 requests the user to designate another network facsimile apparatus from which the network facsimile apparatus FX1 acquires the setting information. The user can designate the other network facsimile apparatus by inputting the network address (IP address, for example) of the other network facsimile. According to another embodiment, the network addresses of other network facsimile apparatuses may be registered in the network facsimile apparatus FX1, and the user may select one of the registered network addresses. According to yet another embodiment, the network addresses of other network facsimile apparatuses may be collected using SNMP (Simple Network Management Protocol).

The network facsimile apparatus FX1 receives a response GetSettingResponse from the requested terminal and acquires the setting information (step 103). In response to receipt of the response GetSettingResponse, the network facsimile apparatus FX1 displays a guidance message (described with reference to FIG. 7) for the user to select one or more categories (step 104). In response to receipt of the user's selection, the network facsimile apparatus FX1 sets the setting information corresponding to the selected categories (step 105) .

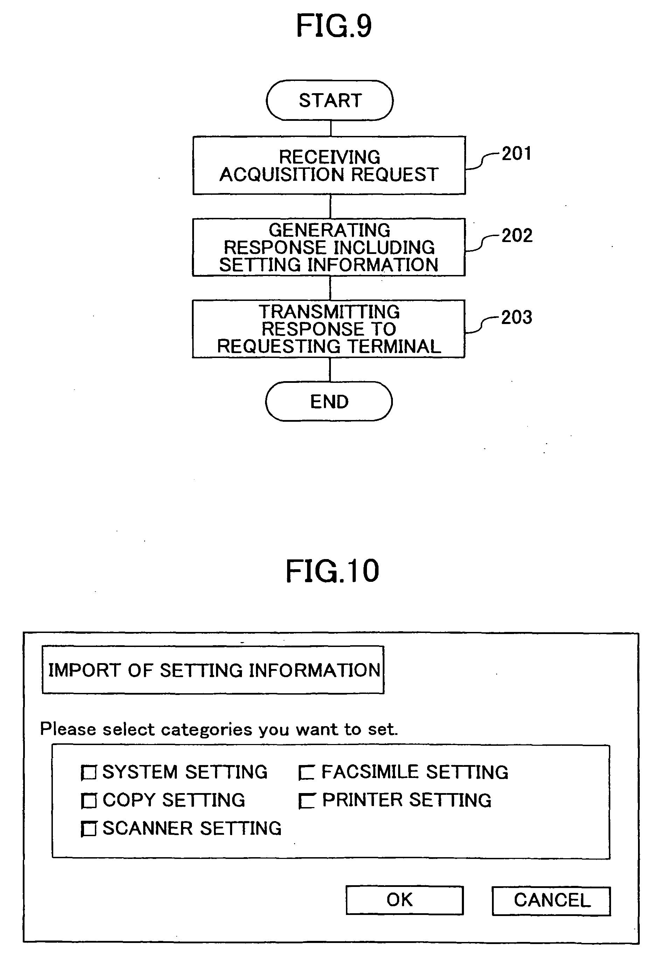

FIG. 9 is a flowchart for explaining the operation of the network facsimile apparatus FX2 according to an embodiment.

In response to receipt of the command GetSettingRequest (step 201), the network facsimile apparatus FX2 retrieves the setting information stored therein and generates the response GetSettingResponse (step 202). The network facsimile apparatus FX2 transmits the response GetSettingResponse to the requesting terminal (step 203).

An exemplary embodiment has been described in which the requesting terminal acquires all categories of the setting information and then, has the user to select one or more of the acquired categories. According to another embodiment, the requesting terminal may have the user select one or more categories and then, acquire only selected categories of the setting information.

In such a case, the network facsimile apparatus FX1 displays a guidance message through which the user selects one or more categories of the setting information as shown in FIG. 10.

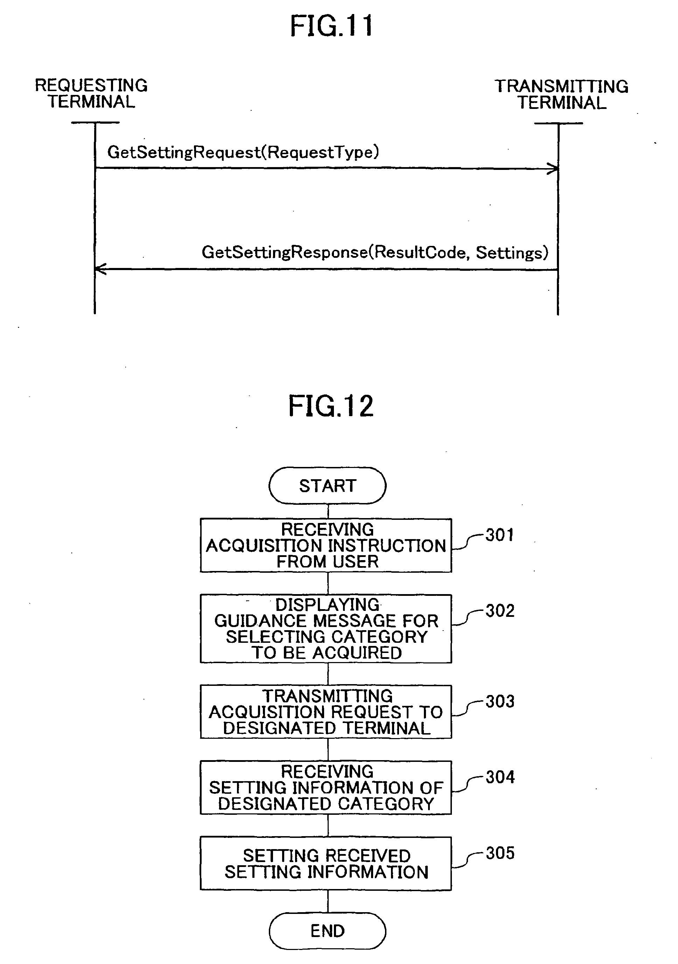

As shown in FIG. 11, the requesting terminal transmits a command GetSettingRequest (RequestType) to the requested terminal. The parameter "RequestType" included in the command GetSettingRequest is information for designating the categories selected by the user.

In response to receipt of the command GetSettingRequest (RequestType), the requested terminal retrieves the setting information stored therein, extracts the categories of the setting information designated by "RequestType", and transmits a response GetSettingResponse including the designated categories of the setting information as parameters to the requesting terminal.

The response GetSettingResponse includes a parameter "ResultCode" indicating the requested terminal has successfully acquired the setting information, and parameters "Settings" carrying the designated category of the setting information.

In response to receipt of the response GetSettingResponse, the requesting terminal extracts the parameters "Settings" and sets the extracted setting information therein.

Because the requesting terminal has the user select one or more categories of the setting information, and then, acquires only the selected categories of the setting information from the requested terminal, the amount of data that are transmitted from the requested terminal to the requesting terminal is reduced. Accordingly, the traffic in the network is reduced.

FIG. 12 is a flowchart for explaining the operation of the network facsimile apparatus FX1 according to another embodiment.

In response to receipt of acquisition instruction from the user (step 301), the network facsimile apparatus FX1 (requesting terminal) displays a guidance massage for selecting one or more categories that the user desires to import (step 302). The requesting terminal transmits a command GetSettingRequest (RequestType) to a designated terminal (requested terminal) for requesting the setting information (step 303).

In step 301, the requesting terminal has the user select the requested terminal by inputting the network address (IP address, for example) of the requested terminal. According to another embodiment, other terminals that are connected to the requesting terminal may be registered in the requesting terminal in advance, and the user may select one of the registered terminals. According to yet another embodiment, information about other terminals that are connected to the requesting terminal may be collected using the SNMP, and the user may select one of the information-collected terminals.

In response to receipt of the response GetSettingResponse including the setting information (step 304), the requesting terminal sets the received setting information therein (step 305).

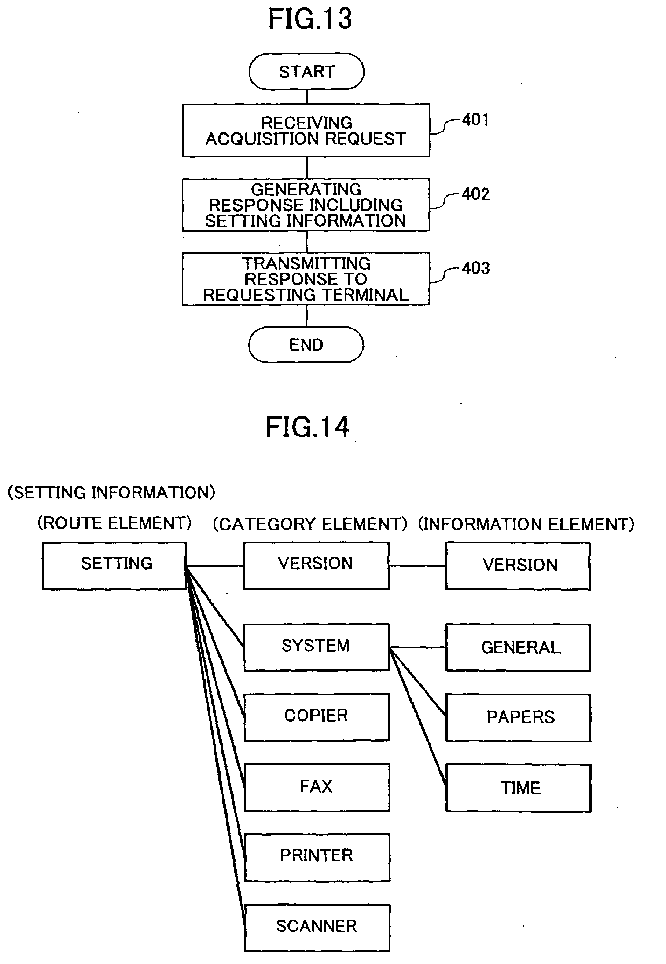

FIG. 13 is a flowchart for explaining the operation of the network facsimile apparatus FX2 according to an embodiment in response to receipt of a command GetSettingRequest (RequestType) from the requesting terminal.

In response to receipt of the command GetSettingRequest (RequestType) (step 401), the requested terminal (network facsimile apparatus FX2) retrieves the setting information stored therein. The requested terminal extracts the designated categories of the setting information, generates a response GetSettingResponse (step 402), and transmits the response GetSettingResponse to the requesting terminal (network facsimile apparatus FX1) (step 403).

If the model of the network facsimile apparatus FX1 is different from that of the network facsimile apparatus FX2, their specifications may be different, and as a result, the setting information to be set therein may be different. Accordingly, the model of requesting terminal and the model of the requested terminal are different, the requesting terminal may be unable to set the setting information acquired from the requested terminal without modifying it.

To solve the above problem, a new category "Version" is added to the setting information. The information element "Version" is unique to a model. Accordingly, the requesting terminal can determine whether the setting information acquired from the requested terminal is usable without modifying it based on the information element "Version".

The setting information is described in the XML. The network facsimile apparatus FX1 may retain a stylesheet (a file defining data transform) generated for each version. If the network facsimile apparatus FX1 receives setting information of which the information element of the category "Version" is different from that of the network facsimile apparatus FX1, the network facsimile apparatus FX1 can transform (XSL Transform) the received setting information using the stylesheet corresponding to the category "Version" into setting information that suits to the version thereof.

According to the above arrangements, even different models can exchange the setting information.

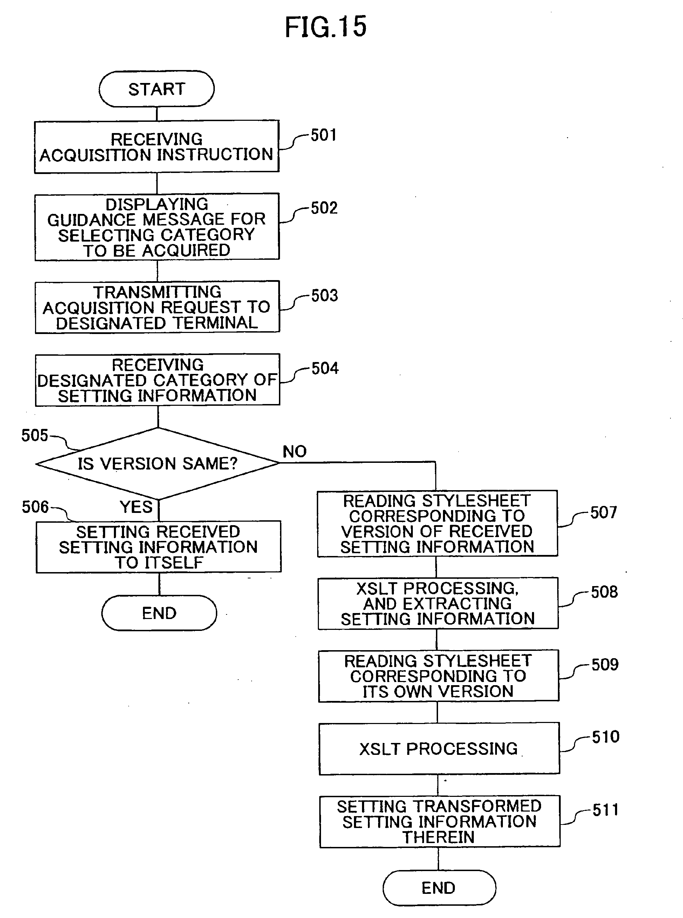

FIG. 15 is a flowchart for explaining the operation of the network facsimile apparatus FX1 according to an embodiment.

In response to receipt of an acquisition request from the user (step 501), the network facsimile apparatus FX1 displays a guidance message through which the user selects one or more categories of setting information (step 502). After the user inputs her selection, the network facsimile apparatus FX1 transmits a command GetSettingRequest (RequestType) (step 503).

In step 501, another network facsimile apparatus (FX2 in this case) is selected by the user, and the setting information stored in the other network facsimile apparatus is acquired. For example, the user may select the other network facsimile apparatus by inputting its network address (IP address, for example). According to another embodiment, other network facsimile apparatuses may be registered in the network facsimile apparatus FX1 in advance, and the user may select one of the registered network facsimile apparatuses. According to yet another embodiment, the SNMP may be used for collecting information of other network facsimile apparatuses connected to the network facsimile apparatus FX1, and the user may be able to select one from the list of connected network facsimile apparatuses.

In response to receipt of a response GetSettingResponse including the setting information (step 504), the network facsimile apparatus FX1 (requesting terminal) determines whether the value of the category "Version" of the received setting information matches its own value (step 505). If the determination in step 505 is YES, the requesting terminal sets the received setting information therein (step 506).

If the determination in step 505 is NO, the requesting terminal reads a stylesheet corresponding to the category value of the received setting information (step 507). The requesting terminal applies XSLT processing to the received setting information, and then, extracts data from the received setting information (step 508) .

Then, the requesting terminal reads a stylesheet corresponding to its own version (step 509). The requesting terminal applies XSLT processing to the data extracted in step 508 thereby to transform the data (step 510), and sets the transformed data therein (step 511).

By the way, if stylesheets corresponding to many different models are stored in the network facsimile apparatus, the stylesheets consumes a large memory capacity of the network facsimile apparatus. To solve this problem, the stylesheets may be stored in a setting information management server SV. When the network facsimile apparatus needs a stylesheet, the network facsimile apparatus FX1 can access the setting information management server SV, and read the stylesheet stored therein. According to the above arrangements, the memory capacity of the network facsimile apparatus FX1 can be reduced.

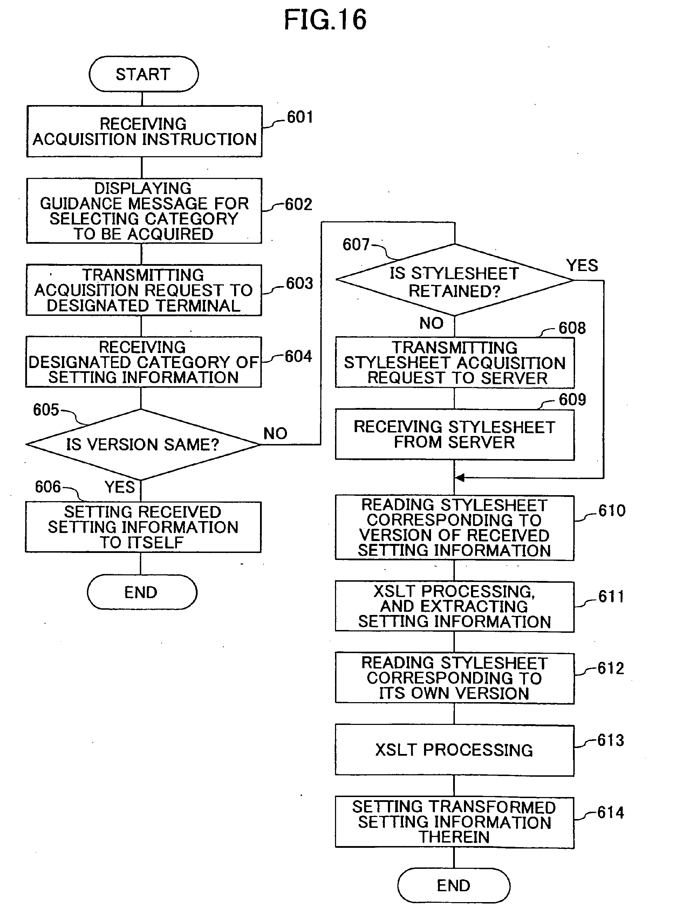

FIG. 16 is a flowchart for explaining the operation of the network facsimile apparatus FX1 according to an embodiment.

In response to receipt of an acquisition instruction from the user (step 601), the network facsimile apparatus FX1 displays a guidance message for selecting one or more categories of setting information (step 602). The network facsimile apparatus FX1 (requesting terminal) transmits a command GetSettingRequest (RequestType) to the network facsimile apparatus FX2 (requested terminal) thereby to request for setting information.

In step 601, another network facsimile apparatus (FX2 in this case) is selected by the user, and the setting information stored in the other network facsimile apparatus is acquired. For example, the user may select the other network facsimile apparatus by inputting its network address (IP address, for example). According to another embodiment, other network facsimile apparatuses may be registered in the network facsimile apparatus FX1 in advance, and the user may select one of the registered network facsimile apparatuses. According to yet another embodiment, the SNMP may be used for collecting information of other network facsimile apparatuses connected to the network facsimile apparatus FX1, and the user may be able to select one from the list of connected network facsimile apparatuses.

In response to receipt of a response GetSetting Response including setting information (step 604), the requesting terminal determines whether the value of the category "Version" of the received setting information matches the value of its own category "Version" (step 605). If the determination in step 605 is YES, the requesting terminal sets the received setting information therein (step 606).

If the result of the determination in step 605 is NO, the requesting terminal determines whether the requesting terminal stores a stylesheet corresponding to the category "Version" of the received setting information (step 607). If the result of the determination in step 607 is NO, the requesting terminal accesses the setting information management server SV for acquiring the stylesheets stored in therein (step 608), and receives the stylesheets from the setting information management server SV (step 609).

The requesting terminal reads the stylesheet corresponding to the received setting information (step 610), and applies XSLT processing thereby to extract data from the received setting information (step 611). If the result of the determination in step 607 is YES, steps 608 and 609 are skipped, and the process proceeds to step 610.

Then, the requesting terminal reads a stylesheet corresponding to its own version (step 612), and applies XSLT processing to the extracted data in step 611 using the read stylesheet (step 613). The requesting terminal sets the data-transformed setting information therein (step 614).

By the way, the setting information of network facsimile apparatuses may be managed by the setting information management server SV. In such a case, the setting information server SV receives and stores the setting information of each network facsimile apparatus under the management by the setting information server SV. In response to receipt of a request from a network facsimile apparatus, the setting information management server SV retrieves the setting information, and transmits the retrieved setting information to the requesting network facsimile apparatus.

According to the above arrangements, the setting information management server SV can manage the setting information of each network facsimile apparatus in the block. Since the setting information is described in the XML format that can be handled as a text file, the administrator of the setting information management server SV can edit the setting information. The setting information can be managed and edited easily.

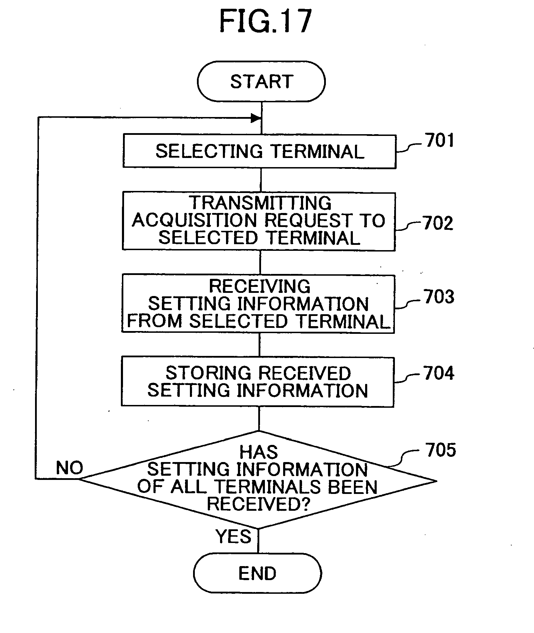

FIG. 17 is a flowchart for explaining the operation of the setting information management server SV according to an embodiment.

The setting information management server selects one terminal (network facsimile apparatus) (step 701), and transmits an acquisition request thereby to acquire the setting information of the terminal (step 702). In response to receipt of the acquisition request from the setting information management server SV, the selected terminal transmits its setting information. In response to receipt of the setting information (step 703), the setting information management server SV stores the received setting information correlating with the selected terminal (step 704).

The setting information management server SV determines whether processing of all terminals has been finished (step 705). If the result of the determination in step 705 is NO, the process returns to step 701, and the setting information of the next terminal is acquired.

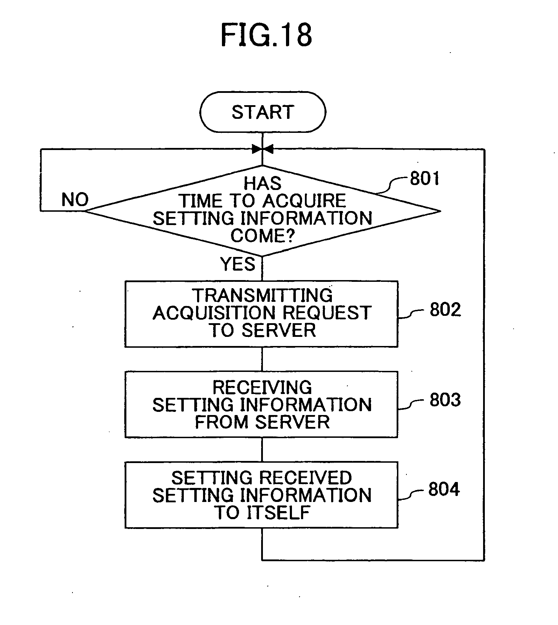

FIG. 18 is a flowchart for explaining the operation according to an embodiment in which the network facsimile apparatus FX1 acquires the setting information from the setting information management server SV. The network facsimile apparatus FX1 acquires the setting information from the setting information management server SV with a predetermined interval (daily or weekly, for example).

The network facsimile apparatus FX1 determines whether a predetermined time has come (step 801). If the result of the determination in step 801 is YES, the network facsimile apparatus FX1 transmits an acquisition request to the setting information management server SV to acquire the setting information (step 802), and receives the setting information from the setting information management server SV (step 803).

In response to receipt of the setting information, the network facsimile apparatus FX1 sets the received setting information therein (step 804).

In the above description, it is assumed that the network facsimile apparatus FX1 acquires setting information from the network facsimile apparatus FX2. However, the network facsimile apparatus FX1 can acquire setting information from the network facsimile apparatus FX3 via the Internet in the same manner. Furthermore, the network facsimile apparatuses FX2 and FX3 can acquire setting information from the network facsimile apparatus FX1 in the same manner.

As described above, a network terminal apparatus according to an aspect of the present invention can acquire setting information from another network terminal apparatus, and can set the acquired setting information therein. As a result, a user can use the network terminal apparatus appropriately without manually setting the setting information.

A network terminal apparatus according to another aspect of the present invention can acquire such setting information that the user requires. Accordingly, the network terminal apparatus can prevent unneeded setting information from being set therein.

The preferred embodiments of the present invention are described above. The present invention is not limited to these embodiments, but variations and modifications may be made without departing from the scope of the present invention as specified in the appended claims.

## Claims

1. A network terminal apparatus (FX1) connected to other network terminal apparatuses (FX2,FX3,WS1-WSn) via a network (LAN), the network terminal apparatus comprising:
a storing unit(3) that stores setting information of the network terminal apparatus;
an acquiring unit that transmits an acquisition request for acquiring setting information to one of the other network terminal apparatuses (FX2,FX3,WS1-WSn), receives the setting information from the one of the other network terminal apparatuses; and
a setting unit that sets the received setting information to the network terminal apparatus (FX1) and stores the received setting information in the storing unit (3);
a transmitting unit (13) that, in response to receipt of an acquisition request for the setting information stored in the storing unit from another one of the other network terminal apparatuses, retrieves the setting information from the storing unit (3), and transmits the retrieved setting information to the other one of the other network terminal apparatuses (FX2,FX3,WS1-WSn);
**characterised in that** the network terminal apparatus (FX1) is configured such that, when it receives the setting information from one of the other network terminal apparatuses (FX2,FX3,WS1-WSn), it displays an operational screen and requests the user to select one or more categories of settings that the user desires to set in the network terminal apparatus; and
the setting unit is configured to set the setting information of the selected categories as the setting information.

2. The network terminal apparatus as claimed in claim 1, wherein the acquiring unit transmits an acquisition request for acquiring a designated item of the setting information, and receives the designated item of the setting information.

3. The network terminal apparatus as claimed in claim 1 or 2, wherein the network terminal apparatus (FX1) acquires the setting information from a setting information management server (SV) provided in the network, that manages the setting information of the network terminal apparatuses (FX1,FX2,FX3,WS1-WSn).

4. The network terminal apparatus as claims in claim 3, wherein the network terminal apparatus (FX1) acquires the setting information from the setting information management server (SV) at predetermined intervals.

5. The network terminal apparatus of any one of the preceding claims, further comprising:
a transforming unit that, if format of the received setting information does not match format of the network terminal apparatus (FX1), transforms the received setting information into format-adjusted setting information;
wherein the setting unit sets the format-adjusted setting information to the network terminal apparatus and stores the format-adjusted setting information in the storing unit 3.

6. The network terminal apparatus as claimed in claim 5, wherein the transforming unit transforms the received setting information based on stylesheet that defines an attribute of each element of the setting information.

7. A method of sharing setting information between a network terminal apparatus (FX1) and another network terminal apparatus (FX2,FX3,WS1-WSn) connected via a network (LAN), the method comprising the steps of:
transmitting a request for acquiring setting information to the other network terminal apparatus (FX2,FX3,WS1-WSn);
receiving the setting information from the other requested network terminal apparatus;
setting the received setting information to the network terminal apparatus (FX1);
storing the received setting information in the network terminal apparatus;
receiving a request for acquiring setting information from another network terminal apparatus (FX2,FX3,WS1-WSn); and
transmitting the setting information to the other requesting network terminal apparatus;
**characterised in that**, when the network terminal apparatus (FX1) receives the setting information from one of the other network terminal apparatuses (FX2,FX3,WS1-WSn), it displays an operational screen and requests the user to select one or more categories of settings that the user desires to set in the network terminal apparatus; and
the setting information of the selected categories is set as the setting information.

8. A computer program comprising program code means which, when executed on a computer system, instructs the computer system to effect the method of claim 7.

9. A network system, comprising:
a first network terminal apparatus (FX1); and
a second network terminal apparatus (FX2) connected to the first network terminal apparatus via a network (LAN), the second network terminal apparatus storing setting information; wherein
the first network terminal apparatus (FX1) is configured to transmit an acquisition request to the second network terminal apparatus (FX2), receive the setting information from the second network terminal apparatus, set the setting information to the first network terminal apparatus, and store the setting information in the first network terminal apparatus;
the second network terminal apparatus (FX2) is configured to transmit the setting information stored therein to the first network terminal apparatus (FX1) in response to receipt of the acquisition request from the first network terminal apparatus; and
the system further comprises a third network terminal apparatus (FX3), configured to transmit an acquisition request to the first network terminal apparatus (FX1), receive the setting information from the first network terminal apparatus (FX1), set the setting information to the third network terminal apparatus and store the setting information in the third network terminal apparatus; and
the first network terminal apparatus (FX1) is configured to transmit the setting information stored therein to the third network terminal apparatus (FX3) in response to receipt of the acquisition request from the third network terminal apparatus;
**characterised in that**, when the first network terminal apparatus (FX1) receives the setting information from the second network terminal apparatus (FX2), the first network terminal apparatus (FX1) displays an operational screen and requests the user to select one or more categories of settings that the user desires to set in the first network terminal apparatus; and
the setting information of the selected categories is set as the setting information of the first network terminal apparatus (FX1).

## Patentansprüche

1. Netzendgerät-Vorrichtung (FX1), die über ein Netz (LAN) mit anderen Netzendgerätvorrichtung (FX2, FX3, WS1-WSn) verbunden ist, wobei die Netzendgerätvorrichtung umfasst:
eine Speichereinheit (3), die Einstellinformationen der Netzendgerätvorrichtung speichert;
eine Ermittlungseinheit, die eine Ermittlungsanforderung zum Ermitteln von Einstellinformationen zu einer der anderen Netzendgerätvorrichtungen (FX2, FX3, WS1-WSn) sendet und die Einstellinformationen von der Einen der anderen Netzendgerätvorrichtungen empfängt; und
eine Festlegungseinheit, die die empfangenen Einstellinformationen für die Netzendgerätvorrichtung (FX1) festlegt und die empfangenen Einstellinformationen in der Speichereinheit (3) speichert;
eine Sendeeinheit (13), die in Reaktion auf den Empfang einer Ermittlungsanforderung für die in der Speichereinheit gespeicherten Einstellinformationen von einer Weiteren der anderen Netzendgerätvorrichtungen die Einstellinformationen aus der Speichereinheit (3) wiedergewinnt und die wiedergewonnenen Einstellinformationen zu der Anderen der anderen Netzendgerätvorrichtungen (FX2, FX3, WS1-WSn) sendet;
**dadurch gekennzeichnet, dass** die Netzendgerätvorrichtung (FX1) in der Weise konfiguriert ist, dass sie dann, wenn sie die Einstellinformationen von einer der anderen Netzendgerätvorrichtungen (FX2, FX3, WS1-WSn) empfängt, einen Arbeitsbildschirm anzeigt und den Anwender auffordert, eine oder mehrere Kategorien von Einstellungen zu wählen, die der Anwender in der Netzendgerätvorrichtung festzulegenwünscht, und
die Einstelleinheit konfiguriert ist, um die Einstellinformationen der ausgewählten Kategorien als die Einstellinformationen festzulegen.

2. Netzendgerätvorrichtung nach Anspruch 1, wobei die Ermittlungseinheit eine Ermittlungsanforderung zum Ermitteln eines bezeichneten Elements der Einstellinformationen sendet und das bezeichnete Element der Einstellinformationen empfängt.

3. Netzendgerätvorrichtung nach Anspruch 1 oder 2, wobei die Netzendgerätvorrichtung (FX1) die Einstellinformationen von einem Einstellinformations-Managementserver (SV), der in dem Netz vorgesehen ist und die Einstellinformationen der Netzendgerätvorrichtungen (FX1, FX2, FX3, WS1-WSn) managt, ermittelt.

4. Netzendgerätvorrichtung nach Anspruch 3, wobei die Netzendgerätvorrichtung (FX1) die Einstellinformationen von dem Einstellinformations-Managementserver (SV) in vorgegebenen Intervallen ermittelt.

5. Netzendgerätvorrichtung nach einem der vorhergehenden Ansprüche, die ferner umfasst:
eine Umformungseinheit, die dann, wenn das Format der empfangenen Einstellinformationen nicht mit dem Format der Netzendgerätvorrichtung (FX1) übereinstimmt, die empfangenen Einstellinformationen in formateingestellte Einstellinformationen umformt;
wobei die Festlegungseinheit die formateingestellten Einstellinformationen für die Netzendgerätvorrichtung festlegt und die formateingestellten Einstellinformationen in der Speichereinheit 3 speichert.

6. Netzendgerätvorrichtung nach Anspruch 5, wobei die Umformungseinheit die empfangenen Einstellinformationen anhand eines Stylesheets bzw. einer Formatvorlage, das bzw. die ein Attribut jedes Elements der Einstellinformationen definiert, umformt.

7. Verfahren für die gemeinsame Nutzung von Einstellinformationen zwischen einer Netzendgerätvorrichtung (FX1) und einer weiteren Netzendgerätvorrichtung (FX2, FX3, WS1-WSn), die über ein Netz (LAN) miteinander verbunden sind, wobei das Verfahren die folgenden Schritte umfasst:
Senden einer Anforderung zum Ermitteln von Einstellinformationen zu der anderen Netzendgerätvorrichtung (FX2, FX3, WS1-WSn);
Empfangen der Einstellinformationen von der anderen aufgeforderten Netzendgerätvorrichtung;
Festlegen der empfangenen Einstellinformationen für die Netzendgerätvorrichtung (FX1);
Speichern der empfangenen Einstellinformationen in der Netzendgerätvorrichtung;
Empfangen einer Anforderung zum Ermitteln von Einstellinformationen von einer weiteren Netzendgerätvorrichtung (FX2, FX3, WS1-WSn); und
Senden der Einstellinformationen der anderen anfordernden Netzendgerätvorrichtung;
**dadurch gekennzeichnet, dass** die Netzendgerätvorrichtung (FX1) dann, wenn sie die Einstellinformationen von einer der anderen Netzendgerätvorrichtungen (FX2, FX3, WS1-WSn) empfängt, einen Arbeitsbildschirm anzeigt und den Anwender auffordert, eine oder mehrere Kategorien von Einstellungen, die der Anwender in der Netzendgerätvorrichtung festzulegen wünscht, zu wählen; und
die Einstellinformationen der ausgewählten Kategorien als die Einstellinformationen festgelegt werden.

8. Computerprogramm, das Programmcodemittel enthält, die dann, wenn sie in einem Computersystem ausgeführt werden, das Computersystem anweisen, das Verfahren nach Anspruch 7 auszuführen.

9. Netzsystem, das umfasst:
eine erste Neizendgerätvorrichtung (FX1); und
eine zweite Netzendgerätvorrichtung (FX2), dieüber ein Netz (LAN) mit der ersten Netzendgerätvorrichtung verbunden ist, wobei die zweite Netzendgerätvorrichtung Einstellinformationen speichert; wobei
die erste Netzendgerätvorrichtung (FX1) konfiguriert ist, um eine Ermittlungsanforderung zu der zweiten Netzendgerätvorrichtung (FX2) zu senden, die Einstellinformationen von der zweiten Netzendgerätvorrichtung zu empfangen, die Einstellinformationen für die erste Netzendgerätvorrichtung festzulegen und die Einstellinformationen in der ersten Netzendgerätvorrichtung zu speichern;
die zweite Netzendgerätvorrichtung (FX2) konfiguriert ist, um die darin gespeicherten Einstellinformationen in Reaktion auf den Empfang der Ermittlungsanforderung von der ersten Netzendgerätvorrichtung zu der ersten Netzendgerätvorrichtung (FX1) zu senden; und
das System ferner eine dritte Netzendgerätvorrichtung (FX3) umfasst, die konfiguriert ist, um eine Ermittlungsanforderung zu der ersten Netzendgerätvorrichtung (FX1) zu senden, die Einstellinformationen von der ersten Netzendgerätvorrichtung (FX1) zu empfangen, die Einstellinformationen für die dritte Netzendgerätvorrichtung festzulegen und die Einstellinformationen in der dritten Netzendgerätvorrichtung zu speichern; und
die erste Netzendgerätvorrichtung (FX1) konfiguriert ist, um in Reaktion auf den Empfang der Ermittlungsanforderung von der dritten Netzendgerätvorrichtung die Einstellinformationen, die in ihr gespeichert sind, zu der dritten Netzendgerätvorrichtung (FX3) zu senden;
**dadurch gekennzeichnet, dass** die erste Netzendgerätvorrichtung dann, wenn die erste Netzendgerätvorrichtung (FX1) die Einstellinformationen von der zweiten Netzendgerätvorrichtung (FX2) empfängt, einen Arbeitsbildschirm anzeigt und den Anwender auffordert, eine oder mehrere Kategorien von Einstellungen, die der Anwender in der ersten Netzendgerätvorrichtung festzulegen wünscht, zu wählen; und
die Einstellinformationen der ausgewählten Kategorien als die Einstellinformationen der ersten Netzendgerätvorrichtung (FX1) festgelegt werden.

## Revendications

1. Appareil terminal de réseau (FX1) connecté à d'autres appareils terminaux de réseau (FX2, FX3, WS1 à WSn) via un réseau (LAN pour "Local Area Network"), l'appareil terminal de réseau comprenant :
une unité de mémorisation (3) qui mémorise de l'information de paramétrage de l'appareil terminal de réseau ;
une unité d'acquisition qui transmet, à l'un des autres appareils terminaux de réseau (FX2, FX3, WS1 à WSn), une demande d'acquisition pour acquérir de l'information de paramétrage, qui reçoit l'information de paramétrage en provenance de l'un des autres appareils terminaux de réseau ; et
une unité de paramétrage qui paramètre l'appareil terminal de réseau (FX1) avec l'information de paramétrage reçue et qui mémorise, dans l'unité de mémorisation (3), l'information de paramétrage reçue ;
une unité de transmission (13) qui, en réponse à la réception, en provenance d'un autre des autres appareils terminaux de réseau, d'une demande d'acquisition pour l'information de paramétrage mémorisée dans l'unité de mémorisation, récupère l'information de paramétrage dans l'unité de mémorisation (3), et transmet, à l'autre des autres appareils terminaux de réseau (FX2, FX3, WS1 à WSn), l'information de paramétrage récupérée,
**caractérisé en ce que** l'appareil terminal de réseau (FX1) est constitué de façon que, lorsqu'il reçoit l'information de paramétrage en provenance de l'un des autres appareils terminaux de réseau (FX2, FX3, WS1 à WSn), il affiche un écran de mise en oeuvre et demande à l'utilisateur de choisir une ou plusieurs catégories de paramétrages avec lesquelles l'utilisateur souhaite paramétrer l'appareil terminal de réseau ; et
**en ce que** l'unité de paramétrage est constituée pour paramétrer, comme information de paramétrage, l'information de paramétrage des catégories choisies.

2. Appareil terminal de réseau selon la revendication 1, dans lequel l'unité d'acquisition transmet une demande d'acquisition pour acquérir un article désigné de l'information de paramétrage, et reçoit l'article désiré de l'information de paramétrage.

3. Appareil terminal de réseau selon la revendication 1 ou 2, dans lequel l'appareil terminal de réseau (FX1) acquiert l'information de paramétrage à partir d'un serveur de gestion d'information de paramétrage (SV) prévu dans le réseau, qui gère l'information de paramétrage des appareils terminaux de réseau (FX1, FX2, FX3, WS1 à WSn).

4. Appareil terminal de réseau selon la revendication 3, dans lequel l'appareil terminal de réseau (FX1) acquiert l'information de paramétrage du serveur de gestion d'information de paramétrage (SV) à des intervalles prédéterminés.

5. Appareil terminal de réseau selon l'une quelconque des revendications précédentes, comprenant en outre :
une unité de transformation qui, si le format de l'information de paramétrage reçue ne concorde pas avec le format de l'appareil terminal de réseau (FX1), transforme l'information de paramétrage reçue en information de paramétrage ajustée en format,
dans lequel l'unité de paramétrage paramètre l'appareil terminal de réseau avec l'information de paramétrage ajustée en format et mémorise, dans l'unité de mémorisation 3, l'information de paramétrage ajustée en format.

6. Appareil terminal de réseau selon la revendication 5, dans lequel l'unité de transformation transforme l'information de paramétrage reçue en se basant sur une feuille de style qui définit un attribut de chaque élément de l'information de paramétrage.

7. Procédé de partage d'information de paramétrage entre un appareil terminal de réseau (FX1) et un autre appareil terminal de réseau (FX2, FX3, WS1 à WSn) connectés via un réseau (LAN), le procédé comprenant les étapes :
de transmission, à l'autre appareil terminal de réseau (FX2, FX3, WS1 à WSn), d'une demande pour acquérir de l'information de paramétrage ;
de réception, de l'autre appareil terminal de réseau demandé, de l'information de paramétrage ;
de paramétrage de l'appareil terminal de réseau (FX1) avec l'information de paramétrage reçue ;
de mémorisation, dans l'appareil terminal de réseau, de l'information de paramétrage reçue ;
de réception, d'un autre appareil terminal de réseau (FX2, FX3, WS1 à WSn), d'une demande d'acquisition d'information de paramétrage ; et
de transmission de l'information de paramétrage à l'autre appareil terminal de réseau demandeur,
**caractérisé en ce que**, lorsque l'appareil terminal de réseau (FX1) reçoit l'information de paramétrage en provenance de l'un des autres appareils terminaux de réseau (FX2, FX3, WS1 à WSn), il affiche un écran de mise en oeuvre et demande à l'utilisateur de choisir une ou plusieurs catégories de paramétrages avec lesquelles l'utilisateur souhaite paramétrer l'appareil terminal de réseau ; et
**en ce que** l'information de paramétrage des catégories choisies est paramétrée en tant qu'information de paramétrage.

8. Programme informatique comprenant un moyen formant code de programme qui, lorsqu'il est exécuté sur un système informatique, ordonne au système informatique de mettre en oeuvre le procédé selon la revendication 7.

9. Système de réseau, comprenant :
un premier appareil terminal de réseau (FX1) ; et
un deuxième appareil terminal de réseau (FX2) connecté au premier appareil terminal de réseau via un réseau (LAN), le deuxième appareil terminal de réseau mémorisant de l'information de paramétrage,
dans lequel le premier appareil terminal de réseau (FX1) est constitué pour transmettre, au deuxième appareil terminal de réseau (FX2), une demande d'acquisition, pour recevoir l'information de paramétrage en provenance du deuxième appareil terminal de réseau, pour paramétrer le premier appareil terminal de réseau avec l'information de paramétrage, et pour mémoriser l'information de paramétrage dans le premier appareil terminal de réseau,
dans lequel le deuxième appareil terminal de réseau (FX2) est constitué pour transmettre, au premier appareil terminal de réseau (FX1), l'information de paramétrage qui y est mémorisé, en réponse à la réception de la demande d'acquisition provenant du premier appareil terminal de réseau ; et
dans lequel le système comprend en outre un troisième appareil terminal de réseau (FX3), constitué pour transmettre, au premier appareil terminal de réseau (FX1), une demande d'acquisition, pour recevoir l'information de paramétrage en provenance du premier appareil terminal de réseau (FX1), pour paramétrer le troisième appareil terminal de réseau avec l'information de paramétrage et pour mémoriser, dans le troisième appareil terminal de réseau, l'information de paramétrage ; et
dans lequel le premier appareil terminal de réseau (FX1) est constitué pour transmettre, au troisième appareil terminal de réseau (FX3) l'information de paramétrage qui y est mémorisée, en réponse à la réception de la demande d'acquisition provenant du troisième appareil terminal de réseau,
**caractérisé en ce que**, lorsque le premier appareil terminal de réseau (FX1) reçoit l'information de paramétrage en provenance du deuxième appareil terminal de réseau (FX2), le premier appareil terminal de réseau (FX1) affiche un écran de mise en oeuvre et demande à l'utilisateur de choisir une ou plusieurs catégories de paramétrages avec lesquelles l'utilisateur souhaite paramétrer le premier appareil terminal de réseau ; et
**en ce que** l'information de paramétrage des catégories choisies est paramétrée en tant qu'information de paramétrage du premier appareil terminal de réseau (FX1).
